# EUROPEAN PATENT APPLICATION

(11) **EP 1 780 522 A1**
(43) Date of publication of application: **02.05.2007**
(21) Application number: 06076891.8
(22) Date of filing: 18.10.2006
(51) Int. Cl.: G01J 5/12, B81B 3/00

(54) **Infrared detecting device with a circular membrane**

(30) Priority: 31.10.2005 US 263105
(71) Applicant: Delphi Technologies, Inc., Troy, Michigan 48007 (US)
(72) Inventor: Dewes, Brian E., Noblesville, IN 46060 (US); Castillo-Borelly, Pedro E., Kokomo, IN 46901 (US); Christenson, John C., Kokomo, IN 46901 (US); Rich, David B., Kokomo, IN 46901 (US)
(74) Representative: Denton, Michael John

(57) **Abstract**

An infrared (IR) sensor (200) includes a semiconductor material (210), a circular membrane (204) and a thermopile (206A). The semiconductor material (210) includes a cavity (205) surrounded by a frame (212). The circular membrane (204) is positioned over the cavity (205) and has a perimeter supported by the frame (212). The membrane (204) has a first surface for receiving thermal radiation and an oppositely-disposed second surface. The membrane (204) includes at least one infrared absorbing layer (550). The thermopile (206A) includes a plurality of serially connected thermocouples. Each of the thermocouples has dissimilar electrically-resistive materials that define measurement junctions (209), which are positioned on the membrane (204), and reference junctions (207), which are positioned on the frame (212).

## Description

### Technical Field

The present invention is generally directed to an infrared detecting device and, more specifically, to an infrared detecting device with a circular membrane.

### Background of the Invention

A wide variety of infrared (IR) detecting devices (IR sensors) have been implemented in commercial applications. For example, IR sensors that include thermopiles comprised of sets of thermocouples have been used in various automotive applications, e.g., climate control systems and seat occupancy detection systems. In a typical thermopile-based IR sensor, a first subset of thermocouple junctions is placed on a diaphragm, which is positioned over a cavity formed in a substrate of the sensor to collect IR energy, and a second subset of thermocouple junctions is formed on the substrate at some advantageous distance from the membrane. The diaphragm provides a measurement or hot junction and the substrate provides a reference or cold junction.

An integrated thermopile-based IR sensor that combines circuitry for processing and compensating output signals of the sensor on a single integrated circuit (IC) chip is also known (see, for example, U.S. Patent No. 6,828,172, entitled "Process for a Monolithically-Integrated Micromachined Sensor and Circuit," to Chavan et al. and U.S. Patent No. 6,793,389, entitled "Monolithically-Integrated Infrared Sensor," to Chavan et al., each of which are hereby incorporated herein by reference in their entirety). As is known, integration of IR sensing and signal processing on the same IC chip leads to various advantages, which include miniaturization, the ability to process very small signals, reduction in cost, simplification of manufacturing and reduced system complexity. While these advantages are significant, merely integrating the sensor element and the microelectronics needed to process the sensor output generally have not yielded an integrated device with optimal operation.

In general, geometry and layout of an integrated IR sensor may be correlated to manufacturability, critical dimensions, signal strength and operation of the IR sensor. Typically, conventionally designed integrated IR sensors, particularly those whose thermopiles are disposed upon square, rectangular or polygonal diaphragms (membranes), may exhibit sub-optimal characteristics. Traditionally, prior art IR sensors have been manufactured by forming circuitry, one or more membrane layers and a thermopile on one side of a silicon substrate. The substrate has then been etched through from a backside to stop on the membrane to form a cavity underneath the membrane. In fact, the IR sensors described by Chavan et al. are generally made in this manner. One method to etch through the silicon substrate has used a deep reactive ion etch (DRIE). Unfortunately, the DRIE process may leave silicon halos around a circumference of a bottom of an etched cavity.

As is known, when a halo extends into a cavity area, it reduces the cavity dimension at the substrate-membrane interface. Furthermore, the degree of under-etch determines a size of the undesirable silicon halo and, thus, the extent that the halo protrudes into the cavity varies with the degree of under-etch. Because the DRIE etch starts from the backside of the substrate and terminates on the membrane, the presence and severity of a silicon halo protrusion into a cavity determines the cavity opening size, which can affect the heat gradient between measurement and reference junctions of the IR sensor and change an output signal of a thermopile, as compared to a thermopile disposed upon a properly formed cavity.

The halo size and the extent to which it protrudes into the cavity also depends upon the geometry of the cavity. In general, halos are least pronounced at the midpoint of a long edge of a cavity, more pronounced at the midpoint of a short edge of a cavity and most pronounced at an interior corner of a cavity. Thus, placing thermocouples in the most advantageous locations on the membrane, prior to cavity formation, may not result in optimal thermocouple placement after the backside cavity etch, when a silicon halo is present.

The degree of protrusion of the halo into the interior of the cavity varies with position along the cavity wall for an IR sensor having a polygonal cavity. Square, rectangular or polygonal membranes, formed by etching through a silicon substrate using a DRIB etch, tend not to have a uniform membrane thickness at given points along their perimeters. In general, a DRIE etch erodes the bulk of the membrane unevenly. Since the center of a geometry etches fastest, the substrate is removed in the center of the membrane first. It should be appreciated that edges of a cavity etch slower, but faster than interior corners of the cavity. Thus, the membrane is exposed to the DRIE etch conditions longest in the center of a geometry, somewhat less along a wall of the geometry and least at an interior corner of the geometry.

As such, the center of a membrane is etched the longest and is the thinnest, the portion of the membrane near the side of the cavity is etched less than the center and the portions of the membrane in the corners of the cavity are etched the least. For similar reasons, elongated cavities, such as rectangular cavities, have different membrane thickness gradients across the two different axes. Thus, membrane thickness of prior art IR sensors is typically non-uniform, both along the wall of a cavity and across the membrane, from any point on one wall of the cavity, to any other point on the wall of the cavity.

Methods to minimize non-uniform etch across a cavity are known to those skilled in the art of DRIE etching. However, these methods are either labor intensive or involve slowing the etch rate significantly, so that a flat etch front proceeds through the substrate, during the etch cycle to provide a more uniform etch and minimize the uneven exposure of the membrane to the etch conditions. This limits the uneven membrane thicknesses in the center of a membrane, along its walls, in its corners and across the membrane. Unfortunately, this process increases the manufacturing cost of the IR sensor and generally slows throughput through expensive, critical equipment.

IR sensors with square, rectangular or polygonal membranes also exhibit uneven stress profiles along the periphery of the membranes. Stresses on a membrane are known to be highest at the edge of the membrane at the midpoint of the sides of a square or rectangular cavity. While this effect is known, desirable and exploited in the placement of the resistors on a pressure sensor, it is an undesirable characteristic in an IR sensor. Stress risers along the midpoint of the cavity sides lead to increased membrane breakage, when the sensor is subjected to internal and external stresses.

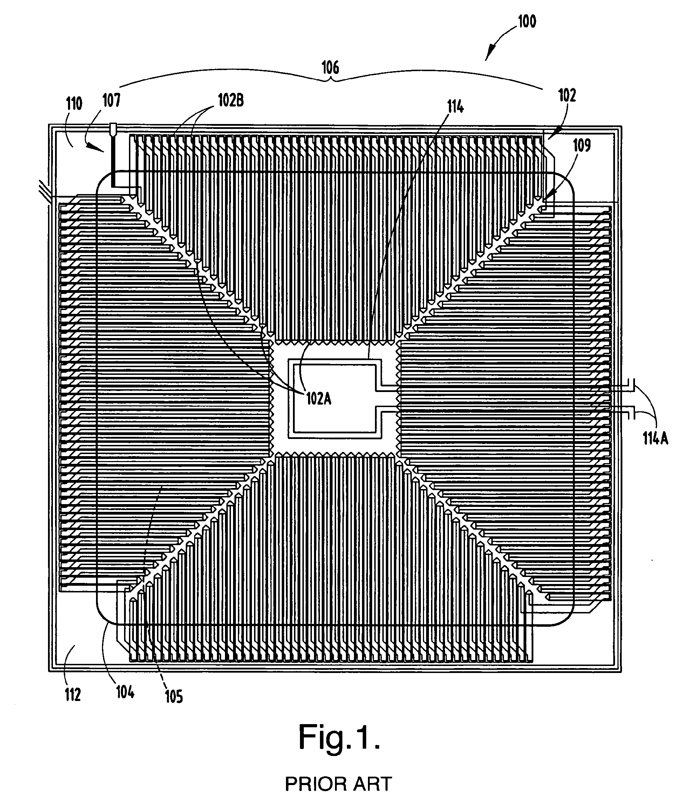

Square, rectangular or polygonal membranes, upon which a thermopile is formed, necessarily have the thermocouples distributed symmetrically across the membrane, typically including along the diagonals of a polygon, in order to locate the largest number of thermocouples on the membrane. With reference to FIG. 1, a top view of an exemplary prior art IR sensor 100, having a square membrane 104 and a heater 114, with input and output lines 114A, is depicted. The membrane 104 is positioned over a cavity 105 formed in substrate 110. In general, thermocouple junctions 102A and 102B, of the sensor 100, are sub-optimally arranged as the thermocouples 102 do not provide an equal contribution to the thermopile 106 response. That is, the thermocouples 102, within the same thermopile 106, are at different distances with respect to reference junction 107 (which is formed on a frame 112) and measurement junction 109 (which is formed on the membrane 104) and, thus, experience different temperatures.

Additionally, temperature distribution of a thermocouple is not axis-symmetric on a polygonal membrane of an IR sensor. Due to the thermal gradient or distribution across a polygonal membrane, from the reference junction to the measurement junction, conventional placement of thermocouples in a symmetric arrangement causes individual thermocouples, within a thermopile, to be at different temperatures. As the sum of all of the signals from the individual thermocouples in a thermopile determines an output of the thermopile, thermopiles with different shaped membranes are generally prone to providing signals of different strengths, even while reading the same temperature. This is so even when the thermopiles have similar area and a similar number of thermocouples in a thermopile.

Further, square or rectangular membranes, with classic thermopile layouts, tend to have sub-optimal signal-to-noise ratios (SNRs), as the packing density and design rules for the thermocouples near the measurement junction dictate the line widths of the dissimilar material leads. It is known that the electrical resistance of a narrower electrical conductor is higher than the resistance of a wider electrical conductor. It is also known that the greater the resistance of the leads on a thermopile, the greater the electrical noise of the device. Thus, narrow, high-resistance leads in a thermocouple of an IR sensor increase the noise of the thermopile and, thus, decrease the SNR of the sensor.

Finally, an integrated IR sensor should be relatively small in area to be produced at a cost that allows for competitive pricing. However, minimizing an IR collection area of an IR sensor also results in reduced output signal strength from thermopiles of the sensor. In general, the more thermocouples that are in a thermopile of an IR sensor, the stronger the output signal of the IR sensor. In general, an IR sensor that does not have the highest possible density of properly placed thermocouples per membrane area will have a reduced output signal, compared to an optimized sensor.

### Summary of the Invention

The present invention is generally directed to an infrared (IR) sensor that includes a substrate, a circular membrane and at least one thermopile. The substrate includes a cavity surrounded by a frame. The at least one thermopile has a plurality of thermocouples. The circular membrane is positioned over the cavity and has a perimeter supported by the frame. The membrane has a first surface for receiving thermal radiation and an oppositely-disposed second surface. The membrane includes at least one infrared absorbing layer and each thermopile includes a plurality of serially connected thermocouple junctions. Each of the thermocouples has dissimilar electrically-resistive materials that define measurement junctions, which are positioned on the membrane, and reference junctions, which are positioned on the frame.

According to another aspect of the present invention, signal processing circuitry is formed on the frame and electrically interconnected with at least one thermopile. According to a different aspect of the present invention, the thermocouples are radially arranged. According to another aspect of the present invention, each of the thermocouple junctions are at a substantially similar point between the measurement junctions and the reference junctions. According to yet another embodiment of the present invention, each of the thermocouples in the at least one thermopile provide a substantially similar contribution to an output signal of the at least one thermopile. According to still another embodiment of the present invention, leads of the thermocouples are wedge-shaped and are narrower at the measurement junctions than at the reference junctions. According to a different aspect of the present invention, the substrate may be a semiconductor material such as silicon. Another aspect of a preferred embodiment is that at least two thermopiles are interleaved on the sensor.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
FIG. 1 is a top view of a typical prior art IR sensor having a square membrane;
FIG. 2 is a top view of an IR sensor having a circular membrane, with thermocouples having wedge-shaped leads positioned on the circular membrane, constructed according to one embodiment of the present invention;
FIG. 3 is a top view of an enlarged portion of an IR sensor having a circular membrane, with thermocouples having wedge-shaped leads positioned on the circular membrane, constructed according to one embodiment of the present invention;
FIG. 4 is a cross-sectional view of the portion of the IR sensor of FIG. 3 taken along the line IIA-IIA; and
FIG. 5 is a Nomarski interference contrast micrograph of the circular membrane of the IR sensor of FIG. 2 under a compressive stress.

### Description of the Preferred Embodiments

According to various embodiments of the present invention, an integrated infrared (IR) sensor having a circular membrane and a circular arrangement of thermocouples formed on a membrane is described herein. The circular nature of the sensor provides improved performance, as compared to integrated IR sensors with square, rectangular or polygonal geometries, even those with rounded corners. Advantages of an IR sensor with a circular membrane may include: improved edge registration and control during processing, more uniform control of the membrane thickness underneath the measurement junction of the thermocouples, uniform stress field along an entire edge of the membrane, reduced breakage, equi-radial measurement and reference junctions, matched thermal distribution of the thermocouples during device operation, individual thermocouple junctions in the thermopile that are at substantially the same temperature during device operation, equal contribution of each of the individual thermocouples to the thermopile signal, wedge-shaped dissimilar material (e.g., doped polysilicon or aluminum) leads, improved signal-to-noise ratio (SNR) over conventional IR sensor layouts and increased signal per unit membrane area (as compared to prior art IR sensors).

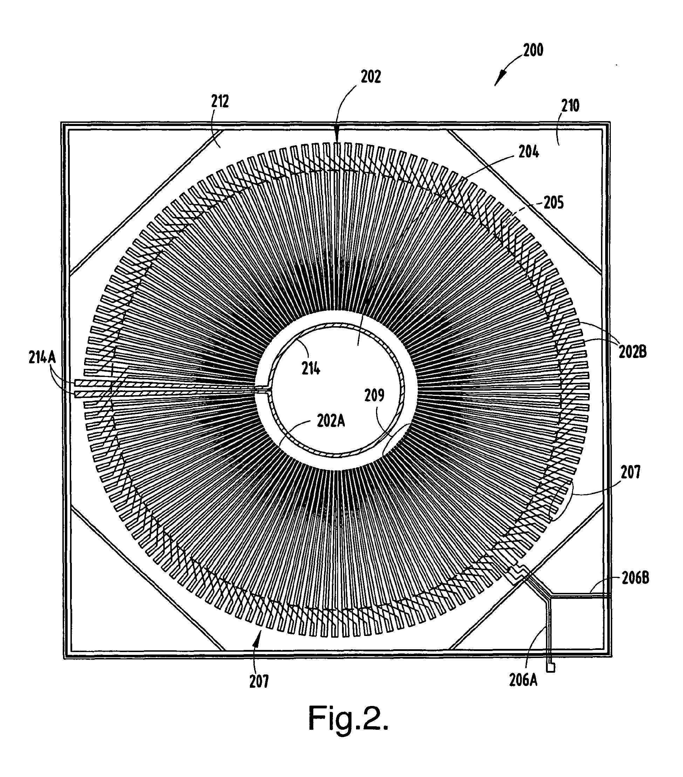

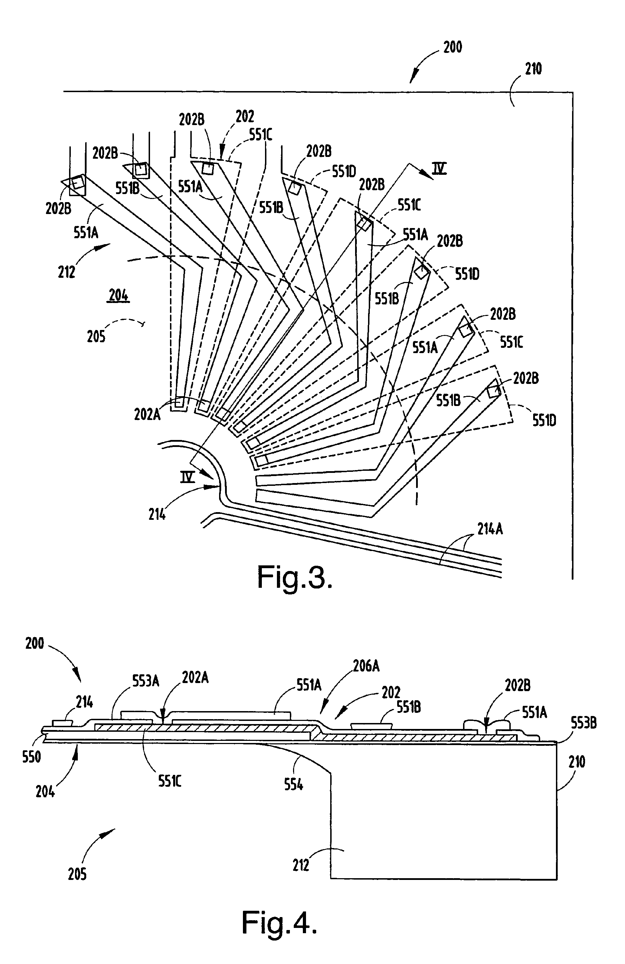

With reference to FIGS. 2-4, an integrated infrared (IR) sensor 200, having a circular membrane 204, a circular heater 214 (having leads 214A) and a circular thermocouple arrangement, is shown. The membrane 204 is formed over a circular cavity 205. The circular membrane 204 has a perimeter supported by a frame 212, and a first surface for receiving thermal radiation and an oppositely-disposed second surface. The circular membrane 204 includes at least one infrared absorbing layer 550 which, according to one embodiment, is a dielectric layer. Integrated circuitry (not shown) of the IR sensor 200 is formed circumferential to the membrane 204 in an advantageous arrangement. The infrared absorbing layer 550 may be located on top of, under, or between other layers as is known.

As constructed, the sensor 200 exhibits a uniform radial membrane thickness variation. Generally, this uniform variation ranges from thinner in a center of the membrane 204 to thicker at an edge of the membrane 204. The IR sensor 200 has thermocouple junctions 202A circularly placed on the membrane 204 to form a measurement junction 209, as well as a circular placement of the thermocouple junctions 202B on the frame 212 of substrate 210 to form a reference junction 207. The thermocouples 202 of the sensor 200 may employ wedge-shaped leads of dissimilar materials (comprised of combinations of metals and/or polysilicon) that serially connect the thermocouple junctions 202A and 202B, at the measurement and reference junctions 209 and 207, to form two interleaved thermopiles, according to one embodiment, 206A and 206B. The wedge-shaped leads of dissimilar materials are electrically isolated from each other by dielectric layer 553A and from the substrate 210 by dielectric layer 553B. The IR sensor 200 may be manufactured, for example, according to processes similar to those set forth in U.S. Patent No. 6,828,172, which has a common inventor with this application. As such, leads 551A and 551C form thermopile 206A, while leads 551B and 551D from thermopile 206B.

As noted above, device geometry and layout may be correlated to ease of manufacturing, critical dimensions, signal strength and operation of an integrated IR sensor. Forming circuitry, a membrane layer or layers, and a thermopile on one side of a substrate, and then etching through the substrate from the backside of the substrate to form a cavity under the membrane, which terminates on, for example, a first layer of the membrane, may comprise one method to form an integrated IR sensor. A deep reactive ion etching (DRIE) may be used to etch through the silicon substrate to form the cavity.

As noted above, DRIE etches can leave 'halos' 554 of silicon around a circumference of a bottom of an etched feature, when the etch is not complete. This halo extends into the cavity area, which reduces the cavity dimension at the substrate-membrane interface. Furthermore, the degree of under-etch determines the size of this undesirable silicon halo and, thus, the extent that the halo protrudes into the cavity varies with the degree of under-etch. Halo thickness and encroachment for any under-etch condition vary in severity, based on the device geometry. According to the present invention, forming a circular cavity in a substrate minimizes a halo thickness and extent over that seen in prior art IR sensors. An IR sensor with a circular cavity exhibits substantially no variation in halo thickness or encroachment in the cavity. In sum, an IR sensor with a circular cavity tends to have a uniform halo, both in thickness and in the amount of encroachment into the cavity, in any location around the circumference of the cavity. As the thermocouples in the thermopile are formed on the membrane in an optimal, radial arrangement, the heat gradient along any radial direction in an under-etched circular device is uniform, albeit somewhat larger than the heat gradient in a properly-etched circular device, for any given temperature difference between the membrane and frame (measurement and reference junctions) of the device.

In the case that the reduced membrane area results in a reduced maximum temperature of the measurement junction, the temperature gradient along the membrane will be lower for the same reference junction temperature. This results in a predictable change in signal strength in a sensor having a circular membrane. This change may be more easily accounted for during the calibration. This, in turn, results in a higher yield for IR sensors having circular membranes, as compared to polygonal devices that have experienced an under-etch during manufacturing. In general, polygonal devices have a less predictable offset which, in turn, leads to a less repeatable signal that is geometry-dependent, as compared to IR sensors having circular membranes.

Membranes formed over circular cavities may still experience DRIE related etch uniformity thickness problems, as the center of the membrane will tend to open first and, as such, is exposed to the DRIE etch environment for the longest time. Because of this, the center of the circular membrane tends to be the thinnest portion of the membrane. However, in contrast to an IR sensor with a polygonal cavity, where the etch rate at the cavity edge is dependent on the geometry (long wall length, short wall length, corners, etc.), an IR sensor with a circular cavity presents a uniform wall geometry around the entire circumference of the cavity. That is, the circular cavity has a uniform etch profile and, thus, etches the same around the periphery. As such, the only etch-related membrane thickness non-uniformity is purely a radial one. As such, as noted above, an IR sensor with a circular cavity exhibits a uniform heat gradient along any radial direction.

Having a uniform, or at least predictable thickness profile, across a membrane is desirable in that it allows for a uniform heat gradient between the measurement junction and the reference junction areas at any radial distance. Slowing the etch rate down, such that a corner region of a polygonal device etches at the same rate as the center of that geometry, is a costly method of assuring a uniform membrane thickness profile. Since a circular cavity device has a uniform membrane thickness gradient, even when the center of the membrane is exposed to the etch for a longer time than the edge of the membrane and, thus, erodes faster than at the edge of the membrane, the importance of having a uniform membrane thickness is reduced or eliminated. Thus, a faster (and often less uniform) etch may be employed, which saves manufacturing time and reduces process associated costs.

Typically, IR sensors with square, rectangular or polygonal membranes also have uneven stress profiles along the periphery of the membranes. Stresses internal to the device may include intrinsic membrane stress. Typically, membranes can have a net tensile or compressive stress and may be formed of multiple layers of both tensile and/or compressive films. Similarly, IC die themselves may have stressed layers on one side that do not exist on the other side of the die, due to processing constraints or other practical considerations and, thus, have a stress imbalance across the body of the die. Stresses external to the device may include capping, mounting and packaging stresses. Temperature changes may subject an IC die to additional stresses. Further, materials associated with the individual layers on a die, mounting, packaging, etc., may have different coefficients of thermal expansion. Stresses on a polygonal membrane are known to be highest at the edge of the membrane at the midpoint of the sides of the cavity. In contrast, an IR sensor with a circular membrane exhibits a uniform stress profile around the circumference of the circular membrane.

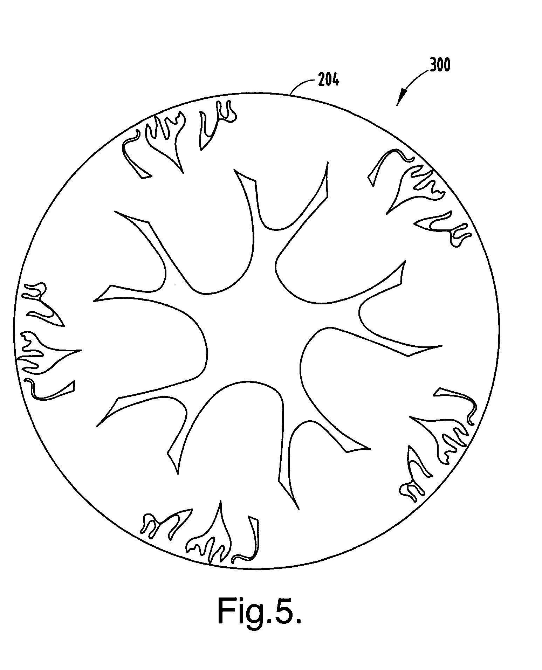

With reference to FIG. 5, a Nomarski interference contrast micrograph 300 indicates that the stress on the circular membrane 204 is uniform. As such, there is a uniform stress profile at the edges of the membrane 204 of the sensor 200. Thus, the membrane in a circular device is more robust and is better able to withstand stresses, both internal and external. In the usual case, yield losses on an integrated IR sensor with a circular cavity are fewer than on similarly sized integrated IR sensors with a polygonal cavity.

Manufacturing processes used in the fabrication of ICs and micro-electro-mechanical systems (MEMS) devices can also cause non-uniformities in the topology of the individual thermocouples. These non-uniformities, along with any non-uniform stresses, may cause performance differences between otherwise similar devices. The more these non-uniformities are limited, the less complicated the compensating electronic circuits need to be. Less complicated compensating circuits are usually less costly to manufacture, save die area and increase potential yield of an IR sensor. The circular membrane, circular placement of the measurement junction thermocouples, the wedge-shaped leads and the uniform radial etch characteristics of the cavity and membrane combine to present an advantageous radially symmetric design for an IR sensor. This symmetry provides for improved operation, as compared to prior art designs, and results in lower part-to-part variation.

A circular placement of the thermocouples on a circular membrane provides a desirable arrangement in that each thermocouple junction is equally distant from the heat collector region of the device and the reference junction of the device. This places each thermocouple at the same relative point along the uniform radial heat gradient between the measurement and reference junctions. Thus, each thermocouple sees the same temperature and contributes equally to the net thermopile response (output signal) and, thus, the IR sensors with circular membranes do not exhibit geometry-related offsets.

In general, it is desirable to make the measurement thermocouple junctions as hot as possible, as compared to the reference thermocouple junctions. This means, practically, placing the measurement thermocouple junctions as close as possible to the hottest portion of the IR sensor, which is at the center of the membrane. Thus, the circular placement of the measurement thermocouple junctions allows for the maximum number of thermocouple junctions at the measurement junction, which then maximizes the signal output of the thermopile.

The IR sensor described herein may advantageously employ wedge-shaped leads, instead of leads of uniform width. Optimization of the thermopile may include determining an appropriate number of individual thermocouples and an appropriate placement for the thermocouples to achieve a desired output signal magnitude. Positioning a maximum number of thermocouple junctions at the measurement junction is generally desirable to improve overall signal strength. At the same time, the total electrical resistance of the thermocouples and their leads determines the electrical noise of the thermopile.

Furthermore, packing density and design rules for the thermocouples near the measurement junctions dictate the line widths of the dissimilar material leads in IR sensors with square or rectangular membranes. Whereas the minimum cross-sectional area of the wedge-shaped leads occur only at the measurement junction ends of the leads in an IR sensor having a circular membrane, the cross-sectional area of the leads on an IR sensor having a square or rectangular membrane must necessarily stay constant at the minimum design rule size in order to maximize the thermocouple density. Furthermore, wedge-shaped leads need to be at their minimum allowed width for a very small portion of their total length. Thus, wedge-shaped leads allow for lower electrical resistance than uniform-width leads for the same thermocouple junction packing density and design rules, as the line width and cross-sectional area of the wedges increase as they radiate radially away from the measurement thermocouple junctions. This increase in line width and cross-sectional area reduces the electrical resistance of the leads and increases the SNR of the sensor.

When implemented, a heater may also be configured as a circular heater, as opposed to a square or octagonal heater. Other design advantages of IR sensors, such as differential designs, heater elements, IR absorber strategy, signal conditioning, absolute temperature sensing, compensating, etc., may be advantageously incorporated in an integrated IR sensor having a circular membrane constructed according to the present invention. The materials chosen for the leads on an integrated IR sensor may be constrained by manufacturing practicality to materials common to IC and MEMS processing. Of primary consideration are those material contributions which possess the highest Seebeck Coefficient. Conductors common to IC and MEMS processing include metals, most typically alloys of aluminum, and polysilicon of various dopings. It should be appreciated that there is a balance between the low electrical resistance of metal (an advantageous feature of metals), and the low thermal resistance of metals (a disadvantageous feature of metals for this application).

The advantages of the low electrical resistance of metal leads can be overwhelmed by the disadvantages of the low thermal resistance (high thermal conductivity) of metal leads. As such, it may be desirable to minimize the amount of metal on the membrane to minimize the lateral heat transfer through the metal from the measurement junction to the reference junction. In some cases, the relative cost to the operation of an IR sensor using polysilicon leads instead of metal leads (which adds electrical resistance and, thus, noise into the thermopile) is offset by the better thermal heat transfer characteristics of the polysilicon leads. This design trade-off should be taken into account when designing a thermopile.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. An infrared sensor (200) comprising:
a substrate (210) including a cavity (205);
a circular membrane (204) positioned over the cavity (205) and having a perimeter supported by the substrate, the membrane (204) having a first surface for receiving thermal radiation and an oppositely-disposed second surface, the membrane (204) including at least one infrared absorbing layer (550); and
at least one thermopile (206A) comprising a plurality of thermocouples having a plurality of serially connected thermocouple junctions (202A), wherein each of the thermocouple junctions (202A) has dissimilar electrically-resistive materials that define measurement junctions (209) which are positioned on the membrane (204) and reference junctions (207) which are positioned on the substrate (210).

2. The sensor of claim 1, wherein the substrate (210) comprises a frame (212), and wherein the reference junctions are positioned on the frame (212).

3. The sensor of claim 1 further comprising:
signal processing circuitry formed on the substrate (210) and electrically interconnected with the at least one thermopile (206A).

4. The sensor of claim 1, wherein the thermocouples are radially arranged.

5. The sensor of claim 1, wherein each of the thermocouples is at a substantially similar point between the measurement and reference junctions (209,207).

6. The sensor of claim 1, wherein each of the thermocouples in the at least one thermopile (206A) provide a substantially similar contribution to an output signal of the at least one thermopile (206A).

7. The sensor of claim 1, wherein leads of the thermocouples are wedge-shaped and are narrower at the measurement junctions (209) than at the reference junctions (207).

8. The sensor of claim 1, wherein the infrared absorbing layer (550) comprises a dielectric layer.

9. The sensor of claim 1, wherein the at least one thermopile (206A) comprises at least two sets of interleaved thermocouples.

10. The sensor of claim 1, wherein the substrate (210) is made of a semiconductor material.

11. The sensor of claim 10, wherein the substrate (210) is made of silicon.
